# EUROPÄISCHE PATENTANMELDUNG

(11) **EP 1 201 937 A1**
(43) Veröffentlichungstag der Anmeldung: **02.05.2002**
(21) Anmeldenummer: 01811023.9
(22) Anmeldetag: 19.10.2001
(51) Int. Cl.: F16B 12/00

(54) **Anordnung zur formschlüssigen Verbindung zweier horizontalen Paneltafeln eines Möbelstuckes**

(30) Priorität: 31.10.2000 CH 21242000
(71) Anmelder: Bissegger, Mario, 6655 Intragna (CH)
(72) Erfinder: Bissegger, Mario, 6655 Intragna (CH)
(74) Vertreter: Gaggini, Carlo, Ing.

(57) **Zusammenfassung**

Die Anordnung zur formschlüssigen Verbindung zweier im Wesentlichen horizontaler Paneltafeln sieht vor, dass in jeder der in gegenseitigem Kontakt stehenden Oberflächen der Paneltafeln (1, 2), die zu verbinden sind, mindestens eine Vertiefung (3, 4) (Figuren 1a und 1b) vorhanden ist, deren Breite (I) und deren Länge (m) im Wesentlichen der doppelten Tiefe (2t) entspricht. In der doppelten Vertiefung (3, 4) wird eine Kugel (5) eingelegt, deren Durchmesser (D) im Wesentlichen (abgesehen von einem geringfügigen Toleranzspiel zum Ausgleich der Fabrikationstoleranzen) der Breite (I) bzw. der Länge (m) der Vertiefungen (3, 4) entspricht.

Die erfindungsgemässe Anordnung erlaubt die Schaffung von absolut stabilen Verbindungspunkten zwischen zwei horizontalen Paneltafeln in einfacher Weise bei geringen Kosten.

Als Kugel (5) wird vorzugsweise eine Kugellager-Stahlkugel verwendet.

## Beschreibung

Die vorliegende Erfindung betrifft eine Anordnung zur formschlüssigen Verbindung zweier horizontaler Paneltafeln eines Möbelstückes.

In der Möbelfabrikation, insbesondere bei der Herstellung von Möbelstücken, die aus mehreren Komponenten zusammengestellt werden, wie Gestelle, Büchergestelle und Ähnliches, stellt sich das Problem, eine Anordnung oder ein System der Verbindung zwischen den einzelnen Komponenten zu realisieren, das schnell hergestellt und schnell montiert werden kann, das perfekte Positionierung der Komponenten und deren Stabilität sicherstellt, in solcher Weise, dass dem ganzen Möbelstück ein hoher Grad von Solidität zukommt, und das nicht zuletzt wenig kosten soll. Weiter ist von Vorteil, wenn das zusammengestellte Möbelstück ohne Zuhilfenahme spezieller Werkzeuge montiert und demontiert werden kann, in solcher Weise, dass diese Arbeitsgänge von jedem Benutzer ausgeführt werden können, auch wenn er kein Spezialist ist.

Zahllos sind die Vorschläge gemäss dem Stand der Technik zur Lösung des genannten Problems. Die gewöhnlichsten, und auch die heute noch hauptsächlich verwendeten Lösungen, sehen die Verwendung von Schrauben und Muttern vor, oft in Verbindung mit speziellen Einsatzteilen. Dabei handelt es sich um Lösungen, die jeder Fachmann auf dem Gebiet kennt, und die heute auch weniger erfahrenen Leuten bekannt sind. Diese Lösungen sind in der Herstellung kompliziert und erfordern für die Montage bzw. für die Demontage des Möbelstückes die Anwendung von Werkzeugen, oft sogar von Spezialvorrichtungen.

Gemäss dem Stand der Technik sind auch Verbindungs-Systeme bekannt, die ohne Schrauben, Muttern und Einatzstücke auskommen, und daher dem Ziel der vorliegenden Erfindung schon näher kommen, ohne jedoch deren Vorteile alle aufzuweisen.

So ist aus der WO-9205724 ein System modular aufgebauter veränderbarer Möbel bekannt, in welchem im Wesentlichen horizontale Möbelelemente verbunden werden, in deren oberen Oberflächen der unteren Komponenten zylindrische Stifte eingelassen sind, die in entsprechende zylindrische Vertiefungen in den unteren Oberflächen der oberen Komponenten eindringen. Natürlich ist auch die umgekehrte Anordnung denkbar. Der Nachteil dieses bekannten Systems zur Verbindung zweier im Wesentlichen horizontaler Paneltafeln eines Möbelstückes liegt darin, dass auf den Paneltafeln (bzw. auf einem Teil der Paneltafeln) Stifte angebracht werden müssen, die aus der Oberfläche der Paneltafeln herausragen, was stets die Gefahr mit sich bringt, dass die Stifte und/oder die anderen Oberflächen der Komponenten des Möbelstückes beschädigt werden. Ferner ist offensichtlich, dass die zylindrischen Stifte, um leicht in die entsprechenden Vertiefungen des Gegenstückes eindringen zu können, mit grösster Genauigkeit angeordnet sein müssen, was Schwierigkeiten bereiten kann, wenn man die Abmessungen der Paneltafeln bedenkt, die vor allem den Schwankungen des Klimas (Feuchtigkeit, Temperatur) unterworfen sind. Dieses Verbindungssystem, das irgendwie an das bei den Lego® -Klötzchen verwendete System erinnert, kann daher nicht allen genannten Ansprüchen gerecht werden, die an die formschlüssige Verbindung zweier im Wesentlichen horizontaler Paneltafeln gestellt werden.

Ein anderes Verbindungssystem zum schnellen Verbinden zusammenzufügender Elemente ist in der US-4797021 gezeigt.

In diesem Fall wird die Verbindung mit Hilfe eines Systems realisiert - das an sich von vielen Anwendungen in der Mechanik bekannt ist - bei welchem eine Kugel in eine ausweitbare Vertiefung eindringt, deren Durchmesser im Wesentlichen kleiner ist als jener der Kugel. Wenn die Kugel in die Vertiefung eindringt (die mit einem elastischen Rand ausgebildet werden kann, wie dies im dargestellten Fall gezeigt ist, oder mit einer radial verformbaren Ringfeder ausgebildet werden kann), setzt sie sich in der Vertiefung fest, wobei es sich eigentlich um eine mehr oder weniger feste Schnappverbindung handelt. Im hier dargestellten Fall, in welchem die beiden zu verbindenden Teile gegeneinander blockiert werden, kann von einer richtiggehenden Befestigung der Teile gesprochen werden. Die Teile lassen sich auch nur unter Überwindung der radialen Kraft wieder trennen, die vom Rand ausgeübt wird, der enger als der Kugeldurchmesser ist. In einer der allgemeinsten Ausführungsformen, die beispielsweise für die Betätigung verbundener Hebelstangen von Mechanismen vorgesehen sind, erlaubt diese Lösung, auch wenn sie im Wesentlichen eine Schnappverbindung darstellt, Bewegungen des einen Teils gegenüber dem anderen, wobei das Drehzentrum das Zentrum der Kugel ist. Diese Lösung, zusätzlich zum Nachteil, eine Schnappverbindung zu bilden, welche die Anwendung einer Kraft erfordert, um die Komponenten voneinander zu trennen, gestaltet sich recht kompliziert wegen des Verformungsmechanismus des Randes der Vertiefung, und verursacht auch Genauigkeits-Probleme, wenn zwei Paneltafeln mittels zweier oder mehrerer Verbindungsanordnungen verbunden werden sollen.

Ein weiterer Vorschlag, der aus der DE-19739040 bekannt ist, zeigt die Möglichkeit, würfelförmige Einheiten in beliebiger Zusammenstellung zusammenzusetzen. Jede Würfelfläche des auf einer Seite zur Bildung eines Regals offenen Würfels weist Vertiefungen auf, die auch in allen anderen Würfelflächen symmetrisch angeordnet sind, in solcher Weise, dass beim Verbinden irgendwelcher Würfelflächen von zwei Würfeln die Verbindung mittels der sich entsprechenden Vertiefungen erstellt werden kann. Als Verbindungselement wird hier ein Stift gezeigt, der in eine Büchse eindringt. Das genannte Dokument interessiert, soweit es die Möglichkeit betrifft, Möbelstücke aus einer Vielzahl zusammengestellter Komponenten zu realisieren, hat jedoch keine besondere Bedeutung in Bezug auf das Verbindungssystem, das nicht über das herkömmliche fixierte Einsatzelement hinausgeht.

Aus dem französischen Dokument FR-2584904 ist überdies eine Anordnung zur Verbindung in Möbeln variabler Geometrie bekannt, insbesondere für ausziehbare niedere Tischchen. Ein oder mehrere untere Teile des Tischchens ist bzw. sind mit einem oberen Teil über Laufrollen oder -Kugeln verbunden, die in geeigneten Nuten laufen. Der Zweck dieser Verbindungsart ist dabei, eine genau definierte Bewegungsfreiheit des einen Teils des Möbelstückes gegenüber einem andern zu schaffen, im Sinn einer reziproken Translationsbewegung. Die Verwendung von Rollen oder Kugeln dient hier also nicht dazu, eine stabile Verbindung eines Teils gegenüber dem andern zu schaffen, sondern eine Führung, welche die Verschiebung eines Teils gegenüber den anderen erlaubt: Auch diese Lösung lässt sich also nicht anwenden, um den in der Einleitung beschriebenen Zweck der vorliegenden Erfindung zu erfüllen.

Die Zielsetzung der vorliegenden Erfindung wird erreicht mit einer Anordnung zur Verbindung zweier im Wesentlichen horizontaler Paneltafeln dank den Eigenschaften, die im kennzeichnenden Teil des Anspruchs 1 beschrieben sind.

Die Ansprüche 2 bis 9 betreffen bevorzugte Ausführungsvarianten der Erfindung, während die Ansprüche 10 und 11 besonders vorteilhafte Anwendungen der erfindungsgemässen Anordnung betreffen.

Die vorliegende Erfindung wird im Folgenden näher beschrieben, unter Bezugnahme auf einige in den Abbildungen illustrierte Ausführungsbeispiele.

Vor der Beschreibung der vorteilhaftesten Ausführungsformen der vorliegenden Erfindung sind jedoch einige Konzepte klarzustellen, die in der Beschreibung der Erfindung erwähnt werden.

Unter dem Begriff "im Wesentlichen horizontale Paneltafeln" ist zu verstehen, dass die Stellung der beiden Paneltafeln, die untereinander parallel sein müssen, nicht stark von der horizontalen Lage abweicht, wobei auch eine Abweichung von mehreren Graden (beispielsweise 10°) gemeint sein kann. Insbesondere ist ein Kriterium zur Feststellung, dass die beiden Paneltafeln im Wesentlichen horizontal sind, die Tatsache, dass sie unter dem Einfluss der Schwerkraft, welche die Haftreibung zwischen den Flächen zu überwinden sucht, nicht eine auf der anderen gleiten.

Unter dem Begriff "im Wesentlichen gleiche Abmessungen" untereinander, beispielsweise "die Tiefe der Ausnehmung ist im Wesentlichen gleich der Hälfte ihrer Breite", oder "der Durchmesser der Kugel ist im Wesentlichen gleich der Breite der Vertiefung", ist zu verstehen, dass diese Abmessungen auch den Differenzen infolge unvermeidlicher Fabrikationstoleranzen Rechnung tragen müssen, so dass die Ausnehmungen stets etwas grösser sein müssen als die Kugeln, die darin eingelegt werden, sei es zur Berücksichtigung der Fabrikationstoleranzen in den Abständen zwischen den Ausnehmungen, oder sei es letztlich zur Berücksichtigung der natürlichen Abweichungen solcher Abstände infolge der Ausdehnung (Wachsen oder Schwinden) der Materialien, aus denen die Paneltafeln gefertigt sind.

Die Abbildungen zeigen in der:
- Fig. 1a und 1b: Die erfindungsgemässe Anordnung im Schnitt bzw. im Grundriss gemäss dem Schnitt A-A in der Fig. 1a in einer ersten Ausführungsvariante;
- Fig. 2a und 2b: Eine erste Ausführungsvariante der erfindungsgemässen Anordnung in zwei gleich wie in den Figuren 1a und 1b gewählten Ansichten;
- Fig. 3a und 3b: Eine andere Ausführungsvariante der erfindungsgemässen Anordnung in zwei gleich wie in den Figuren 1a und 1b gewählten Ansichten;
- Fig. 4a und 4b: Im Aufriss und im Grundriss die Anwendung der erfindungsgemässen Anordnung zur Realisierung eines Möbelstückes mit zwei Elementen, die gegeneinander verdreht werden können, wobei in der Fig. 4a das Möbel im Aufriss und in der Fig. 4b im Grundriss gezeigt sind;
- Fig. 5a und 5b: Im Aufriss und im Grundriss ein Möbelstück, das ähnlich wie das in den Figuren 4a und 4b gezeigte aus zwei Elementen besteht, die hier jedoch mittels erfindungsgemässen Anordnungen zur Verbindung zusammengefügt und daher gegeneinander unbeweglich sind.
- Fig. 6: Ein Möbelstück, das aus einer Mehrzahl von Komponenten zusammengestellt ist, die untereinander mittels erfindungsgemässen Anordnungen zur Verbindung zusammengebaut sind, in einer perspektivischen Darstellung.

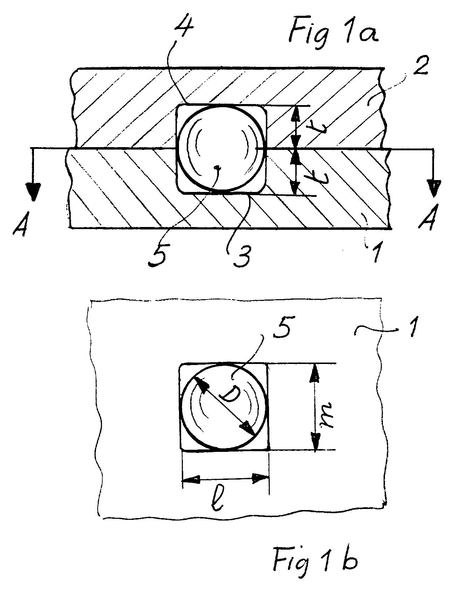

In den Figuren 1a und 1b ist eine erfindungsgemässe Anordnung zur formschlüssigen Verbindung in ihrer allgemeinsten Ausführungsform gezeigt.

Hier sei klargestellt, dass das Konzept der Formschlüssigkeit so zu verstehen ist, dass zwei Teile gegenseitig ausschliesslich aufgrund ihrer geometrischen Form zusammengehalten werden, ohne dass dabei irgendwelche äussere Kraft aufgebracht wird (mittels Schrauben oder ähnlichen Vorrichtungen), welche die Teile zusammenhält.

Die mit 1 bezeichnete untere Paneltafel aus Holz oder aus einem sonstigen Material und die mit 2 bezeichnete obere Paneltafel, die sich mit ihrem Gewicht auf die untere Paneltafel 1 abstützt, sind im Wesentlichen horizontal angeordnet.

Zum formschlüssigen Zusammenfügen zweier Paneltafeln an einer oder mehreren Stellen (wie dies im Folgenden genauer erklärt wird) in jeder der beiden Oberflächen der gegenseitig in Kontakt kommenden Paneltafeln 1 und 2, ist je mindestens eine Vertiefung 3, 4 vorhanden, deren Breite I genau deren Länge m entspricht, und deren Tiefe t im Wesentlichen gleich der Hälfte der Breite ist (t = l/2). Die Verbindung zwischen den beiden Paneltafeln 1 und 2 wird mittels einer Kugel 5 erreicht, deren Durchmesser D im Wesentlichen der Breite I der Vertiefungen 3 und 4 entspricht, und die in die beiden Vertiefungen 3 und 4 in den Oberflächen der beiden zu verbindenden Paneltafeln 1, 2 eingelegt wird.

Klarerweise bleibt dank der im Wesentlichen spielfrei in den Vertiefungen 3 und 4 eingelegten Kugel 5 (ausser einem kleinen Spiel, das zur Berücksichtigung der Fabrikationstoleranzen verbleiben kann, wie dies unter Bezugnahme auf eine bevorzugte Ausführungsform der vorliegenden Erfindung im Folgenden erklärt wird) die Verbindung zwischen den Paneltafeln 1 und 2 eindeutig, solange sich die beiden Paneltafeln aufeinander abstützen. In vertikaler (oder annähernd vertikaler) Lage würde die Schwerkraft natürlich unwirksam, welche die Paneltafel 2 auf die Paneltafel 1 drückt, so dass die erfindungsgemässe Verbindung nicht mehr funktionieren könnte. Aus diesem Grund - unter absichtlichem Verzicht auf das Ausüben äusserer Kräfte auf die Paneltafeln 1 und 2 ausser der Schwerkraft - ist die erfindungsgemässe Anordnung zur Verbindung auf zwei im Wesentlichen horizontal angeordnete Paneltafeln ausgerichtet. Dabei ist jedoch schon hier zu unterstreichen, dass die Anwendung der erfindungsgemässen Anordnung zur Verbindung als Zentrierelement (und nicht als Verbindungselement) auch für vertikal angeordnete Paneltafeln möglich ist, wie dies im Folgenden unter Bezugnahme auf ein besonderes Anwendungsbeispiel der Anordnung erklärt wird. Dennoch ist festzuhalten, dass die erfindungsgemässe Anordnung primär eine Anordnung zur formschlüssigen Verbindung für im Wesentlichen horizontale Paneltafeln ist, da sie in dieser Funktion ihr ganzes Potenzial entfaltet.

Wenn zwischen den beiden Paneltafeln 1 und 2 nur eine einzige erfindungsgemässe Anordnung zur Verbindung vorgesehen ist, wird es möglich, die eine Paneltafel gegenüber der andern um das Zentrum der Kugel 5 zu verdrehen: In diesem Fall erhält man eine Verbindung mit einem Freiheitsgrad der Drehbewegung, was für bestimmte Anwendungen im Gebiet der Möbel (beispielsweise für die Realisierung horizontaler Unterlagen für Fernsehapparate) nützlich sein kann.

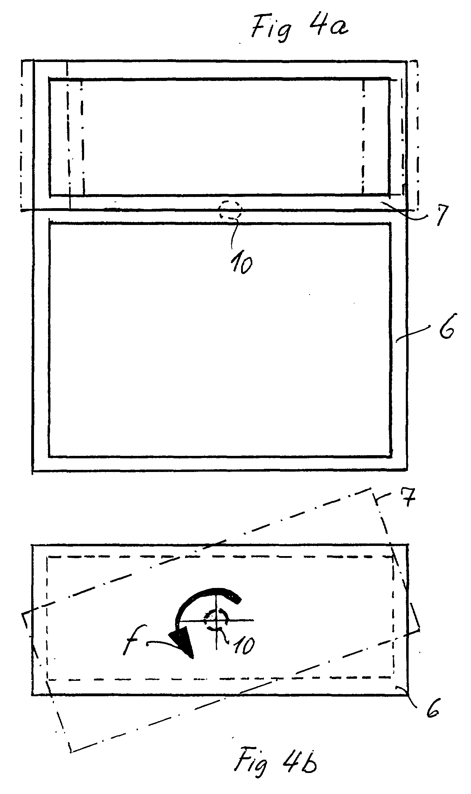

Diese Situation ist beispielsweise in den Figuren 4a und 4b gezeigt, welche ein Möbelstück darstellen, das aus einem unteren Element 6 und einem oberen Element 7 besteht, die miteinander mittels einer einzigen erfindungsgemässen Anordnung zur Verbindung 10 verbunden sind. Das obere Element7 kann um die Anordnung zur Verbindung 10 in solcher Weise verdreht werden, wie dies mit dem Pfeil f angedeutet ist, dass es auf jede Richtung im Raum ausgerichtet werden kann.

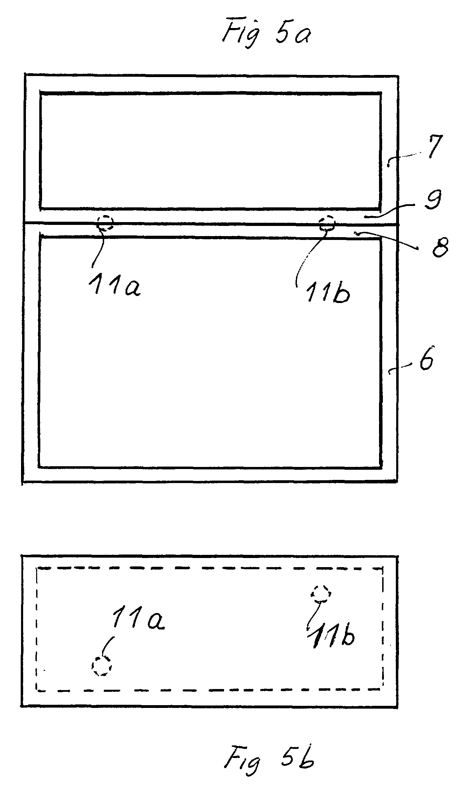

Wenn mindestens zwei Vertiefungen in jeder Oberfläche und an spiegelsymmetrischen Punkten der zu verbindenden Oberflächen angebracht sind, entsteht eine eindeutige und festgefügte Verbindung in dem Sinne, dass die beiden Teile längs ihren beiden Stützflächen nicht gegeneinander verschoben werden können. Diese Situation ist im Sinne eines Beispiels in den Figuren 5a und 5b dargestellt, in denen ein Möbelstück gezeigt ist, das aus einem unteren Element 6 und einem oberen Element 7 besteht, das sich mit seiner unteren Paneltafel 9 auf die obere Paneltafel 8 des unteren Elementes 6 abstützt. Zwischen den beiden Paneltafeln 8 und 9 sind zwei erfindungsgemässe Anordnungen zur Verbindung 11 a und 11 b vorhanden, die bloss schematisch mit dem Umriss der betreffenden Kugeln angedeutet sind, und die an spiegelbildlichen Stellen in solcher Weise angeordnet sind, dass sie aufeinander zu liegen kommen, wenn die obere Fläche der Paneltafel 8 mit der unteren Fläche der Paneltafel 9 in Kontakt gebracht wird.

Selbstverständlich können die beiden horizontalen Paneltafeln mittels einer beliebigen Anzahl von erfindungsgemässen Anordnungen zur Verbindung zusammengefügt werden: es genügt, dass die Vertiefungen in den Paneltafeln perfekt spiegelsymmetrisch angeordnet sind.

In der Regel reichen zwei erfindungsgemässe Anordnungen zur Verbindung zwischen zwei Oberflächen aus, um eine sichere Verbindung der beiden Paneltafeln zu gewährleisten. Im Fall zusammensetzbarer Möbel kann man sich in bestimmten Situationen oft mit einer einzigen Anordnung zur Verbindung zweier zusammenzufügender Paneltafeln begnügen, ohne die Gefahr der Verdrehung einer Paneltafel auf einer anderen in Kauf zu nehmen. Der Entwerfer zusammensetzbarer Möbel hat dabei grosse Wahlfreiheit.

Die in den Figuren 1a und 1b gezeigten Vertiefungen 1 und 2 weisen quadratische Form auf und sind deshalb schwierig zu realisieren.

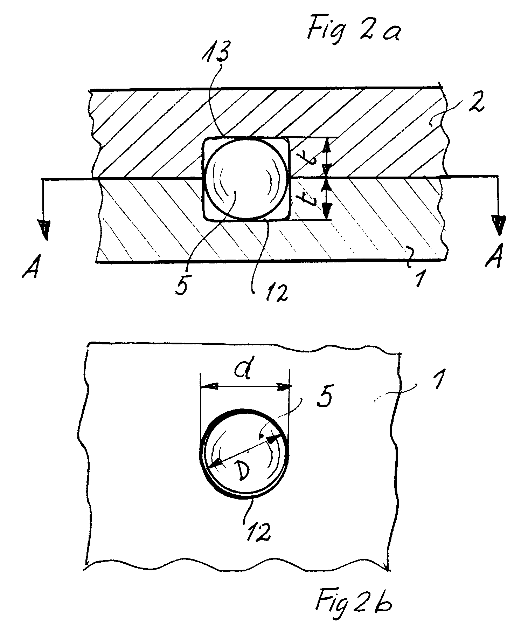

Daher sieht eine in den Figuren 2a und 2b (in denen die gleich wie in den Figuren 1a und 1b dargestellten Elemente mit den gleichen Bezugszeichen versehen sind) dargestellte bevorzugte Ausführungsvariante der vorliegenden Erfindung vor, dass die Vertiefungen 12 und 13 zylindrische Form aufweisen, und dass ihre Tiefe t im Wesentlichen gleich der Hälfte des Durchmessers d des Zylinders ist, der seinerseits im Wesentlichen dem Durchmesser D der Kugel 5 entspricht. In der Fig. 2b ist eine gewisse Differenz zwischen d und D bewusst übertrieben dargestellt, wobei in Wirklichkeit d nur geringfügig grösser ist als D, in solcher Weise, dass die Kugel 5 mit einem kleinen Spiel in den Vertiefungen 12 und 13 Platz findet.

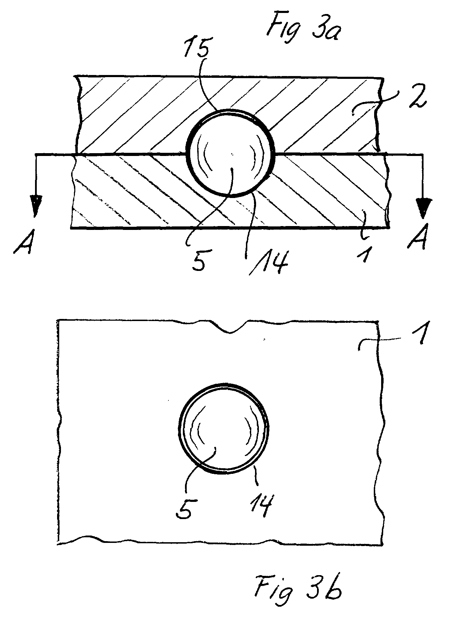

Eine andere bevorzugte Ausführungsform der vorliegenden Erfindung ist in den Figuren 3a und 3b dargestellt, die in den Grundzügen jener gemäss den Figuren 1a und 1b bzw. den Figuren 2a und 2b entsprechen. Gemäss dieser Variante sind die Vertiefungen 14 und 15 halbkugelförmig ausgebildet. Auch hier ist festzustellen, dass zwischen der Kugel 5 und den Vertiefungen 14 bzw. 15 ein gewisses Spiel verbleibt, das in den Abbildungen übertrieben gross dargestellt ist. Der Zweck dieses Spiels wurde bereits unter Bezugnahme auf die Figuren 2a und 2b beschrieben und ist auch Gegenstand der Ansprüche 6 und 7, wonach die Breite I, die Länge m, und die doppelte Tiefe 2t der Vertiefungen geringfügig grösser sein sollen als der Durchmesser D der Kugel 5, im Sinn einer Übermasstoleranz, die beispielsweise 0.1 bis 0.5 mm betragen kann.

Der Vorteil der Lösung gemäss den Figuren 3a und 3b besteht darin, dass die Kugel auf der ganzen Fläche der Wand der Vertiefungen 14 bzw. 15 aufliegt, so dass die Probleme wegen lokaler Verformungen der Vertiefungen vermindert, wenn nicht aufgehoben werden. Ferner sind halbkugelförmige Vertiefungen unter Verwendung eines geeigneten Fräswerkzeuges leicht herzustellen.

Gemäss einer weiteren bevorzugten Variante der vorliegenden Erfindung ist darüber hinaus vorgesehen, dass die erwähnte Toleranz der Abmessungen der Vertiefungen 3, 4; 12, 13; 14, 15 die Toleranzen in den Abständen zwischen den Verbindungspunkten, die zwischen zwei Paneltafeln 1, 2 bzw. 8, 9 vorliegen sowie allfälliges Wachsen und Schwinden der Paneltafeln 1, 2; 8, 9 infolge der normalen Schwankungen in Temperatur und Feuchtigkeit, denen sie im praktischen Gebrauch unterworfen sind, berücksichtigt. Normalerweise liegen die erwähnten Toleranzen in der Grössenordnung von wenigen Zehntelmillimetern. Allerdings können bei Paneltafeln sehr grosser Abmessungen, die zudem starken Temperaturschwankungen ausgesetzt sind, auch grössere Toleranzen erforderlich sein. Es bleibt Aufgabe des Fachmanns, die bestgeeigneten Toleranzen von Fall zu Fall zu bestimmen.

Gemäss einer bevorzugten Ausführungsform der vorliegenden Erfindung ist sodann vorgesehen, dass die Kugel 5 eine Kugellager-Stahlkugel sein soll: Dies stellt eine wirtschaftlich günstige Lösung dar, die sehr bequem und genau ist, wobei die Kugel 5, bzw. die Kugellager-Stahlkugel einen Durchmesser D zwischen 10 und 15 mm aufweisen kann, und vorzugsweise einen Durchmesser von 13 mm aufweist. Diese Abmessungen haben sich in der Praxis für den Grossteil der Anwendungen der vorliegenden Erfindung als ideal erwiesen, insbesondere wo es um die Herstellung zusammengesetzter Möbel geht, die zur Verwendung als Regale oder Büchergestelle vorgesehen sind.

Gemäss einer weiteren bevorzugten Ausführungsform der erfindungsgemässen Anordnung ist sodann vorgesehen, dass die genannte Übermasstoleranz der Breite I und der Länge m der Vertiefung 3, 4; 12, 13; 14, 15 gegenüber dem Durchmesser D der Kugel 5 kleiner als 0.5 mm sein soll, während die Übermasstoleranz der Tiefe t der Vertiefung 3, 4; 12, 13; 14, 15 gegenüber dem Durchmesser D der Kugel 5 kleiner als 0.3 mm sein soll.

Auch diese Dimensionsangaben beziehen sich ebenfalls auf den optimalen Anwendungsfall der erfindungsgemässen Anordnung. Dies schliesst jedoch nicht aus, dass in speziellen Fällen über diese Grenzen hinaus gegangen werden muss, was immer noch im Rahmen der vorliegenden Erfindung liegt.

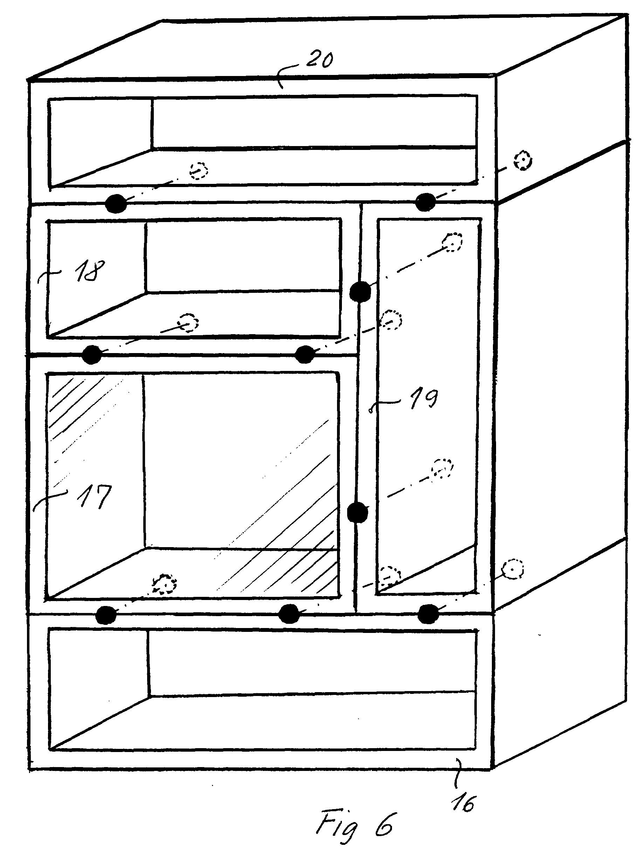

In der Fig. 6 ist eine besonders interessante Anwendung der erfindungsgemässen Anordnung dargestellt, die auch Gegenstand des Patentschutzes ist. Gemäss der Fig. 6 sind fünf Möbelkomponenten zusammengebaut, nämlich:
Eine erste horizontale Komponente 16, die sich über die gesamte Länge des Möbelstückes erstreckt, drei zentrale Komponenten 17, 18 und 19 sowie eine obere horizontale Komponente 20, die sich ebenfalls über die gesamte Länge des Möbelstückes erstreckt.

Diese fünf Komponenten 16 bis 20 sind mittels neun erfindungsgemässen Anordnungen zur Verbindung untereinander zusammengehalten, dargestellt durch eine schwarze Kugel in ihrer Projektion auf die vordere vertikale Ebene, und gestrichelt dargestellt in ihrer wirklichen Lage der Verbindung der Paneltafeln. Daraus ist ersichtlich, dass die erfindungsgemässe Anordnung zur Verbindung sowohl zum Verbinden von Paaren im Wesentlichen horizontaler Paneltafeln verwendet werden kann, wie jene, welche die Komponenten 16, 17 bzw. 17 und 18 oder 18 und 20 trennen, als auch zur Verbindung von Paaren vertikaler Paneltafeln, wie jene, welche die Komponenten 17 und 19 trennen. In einem solchen Fall ist allerdings erforderlich, wie dies in der Fig. 6 im Sinne eines Beispiels gezeigt ist, dass die Komponenten 17, 19, die Paare im Wesentlichen vertikaler Paneltafeln enthalten, untereinander mittels mindestens einer Komponente des Möbelstückes (16 und/oder 19 im gezeigten speziellen Fall) zusammengehalten sein müssen, welche die beiden Komponenten 17, 19 längs einer horizontalen Ebene verbinden, welche die beiden vertikalen Paneltafeln enthalten. Die Erfahrung hat gezeigt, dass die Anwendung der erfindungsgemässen Anordnungen auch für Paare vertikaler Paneltafeln innerhalb eines aus vielen Elementen zusammengebauten Möbelstückes dem Möbel eine ausgezeichnete Starrheit verleiht, was erlaubt, von den Verbindungseigenschaften der erfindungsgemässen Anordnung zur Verbindung auch für vertikal angeordnete Paneltafeln Gebrauch zu machen.

Zu guter Letzt ist festgestellt worden, dass die vorliegende Erfindung mit allen ihren Möglichkeiten voll ausgenützt werden kann, wenn die Komponenten, die ein Möbelstück bilden, modular ausgelegt sind, das heisst, wenn sie Abmessungen gemäss gut ausgedachter Modulsysteme aufweisen, die sich für den Aufbau von Büchergestellen und/oder offenen und/oder mit Türen und/oder Verglasungen versehenen Regalen eignen.

In der Fig. 6 ist ein Beispiel solcher Ausführungsformen dargestellt.

Die erfindungsgemässe Anordnung zur Verbindung zeichnet sich durch ihre grosse Einfachheit in der Herstellung aus, sowie durch ihre geringen Kosten und ihre Vielseitigkeit ihrer Anwendungen. Dies erlaubt die Realisierung zusammenstellbarer Möbel, die im Praxisgebrauch jederzeit ohne Anwendung von Werkzeugen und ohne Beizug von Spezialisten für Möbelmontage umgebaut werden können. Die solcherweise realisierten zusammenstellbaren Möbelstücke weisen grosse Starrheit auf und gewährleisten absolute Stabilität, obschon sie keinerlei kraftschlüssigen Befestigungsmittel aufweisen.

### Liste der in den Figuren verwendeten Bezugsziffern

- 1: untere Paneltafel
- 2: obere Paneltafel
- 3: Vertiefung in der Paneltafel 1
- 4: Vertiefung in der Paneltafel 2
- 5: Kugel
- 6: unteres Element
- 7: oberes Element
- 8: obere Paneltafel des unteren Elementes
- 9: untere Paneltafel des oberen Elementes
- 10: Verbindungsanordnung
- 11: Verbindungsanordnung
- 12: zylindrische Vertiefung
- 13: zylindrische Vertiefung
- 14: halbkugelförmige Vertiefung
- 15: halbkugelförmige Vertiefung
- 16: horizontale Komponente
- 17: zentrale Komponente
- 18: zentrale Komponente
- 19: zentrale Komponente
- 20: obere horizontale Komponente

## Patentansprüche

1. Anordnung zur formschlüssigen Verbindung zweier im Wesentlichen horizontalen Paneltafeln eines Möbelstückes,
**dadurch gekennzeichnet, dass**
in jeder der beiden Oberflächen der in gegenseitigem Kontakt stehenden Paneltafeln (1, 2) ist eine Vertiefung (3, 4; 8, 9; 14, 15) vorhanden, deren Breite (I) genau gleich ist wie deren Länge (m), und deren Tiefe (t) im Wesentlichen gleich der Hälfte der Breite (I) ist, wobei die Verbindung mittels einer Kugel 5 bewerkstelligt wird, deren Durchmesser (D) im Wesentlichen gleich ist wie die Breite (I) der Vertiefungen (3, 4; 8, 9; 14, 15), und die in die zwei Vertiefungen (3, 4; 8, 9; 14, 15) der beiden zu verbindenden Paneltafeln eingelegt wird.

2. Anordnung gemäss dem Anspruch 1,
**dadurch gekennzeichnet, dass**
mindestens zwei Vertiefungen in jeder der Oberflächen angebracht sind, die an spiegelsymmetrischen Punkten der zu verbindenden Oberflächen angeordnet sind.

3. Anordnung gemäss dem Anspruch 1,
**dadurch gekennzeichnet, dass**
die Vertiefungen(12, 13) zylindrische Form aufweisen, und dass deren Tiefe (t) im Wesentlichen der Hälfte des Durchmessers (d) des Zylinders entspricht.

4. Anordnung gemäss dem Anspruch 1,
**dadurch gekennzeichnet, dass**
die Vertiefungen(14, 15) halbkugelförmig ausgebildet ist.

5. Anordnung gemäss dem Anspruch 1,
**dadurch gekennzeichnet, dass**
die Kugel (5) eine Kugellager-Stahlkugel ist.

6. Anordnung gemäss dem Anspruch 1,
**dadurch gekennzeichnet, dass**
die Breite (I), die Länge (m) und die doppelte Tiefe (2t) der Vertiefungen (3, 4; 8, 9; 14, 15) geringfügig grösser sind als der Durchmesser (D) der Kugel (5), im Sinne einer Übermass-Toleranz.

7. Anordnung gemäss dem Anspruch 6,
**dadurch gekennzeichnet, dass**
die Toleranz der Abmessungen der Vertiefungen (3, 4; 8, 9; 14, 15) die Toleranz der Abstände zwischen den Verbindungspunkten, die in den beiden Paneltafeln (1, 2; 8, 9) vorhanden sind, und allfälligem Wachsen oder Schwinden der Paneltafeln (1, 2; 8, 9) infolge der Schwankungen der Temperatur und der Feuchtigkeit Rechnung trägt, welcher die Paneltafeln (1, 2; 8, 9) im praktischen Gebrauch unterworfen sind.

8. Anordnung gemäss den Ansprüchen 1 bis 7,
**dadurch gekennzeichnet, dass**
der Durchmesser (D) der Kugel (5) bzw. der Kugellager-Stahlkugel zwischen 10 und 15 mm liegt und vorzugsweise 13 mm beträgt.

9. Anordnung gemäss den Ansprüchen 1 bis 8,
**dadurch gekennzeichnet, dass**
die Übermass-Toleranz der Breite (I) und der Länge (m) der Vertiefung (3, 4; 8, 9; 14, 15) gegenüber dem Durchmesser (D) der Kugel kleiner als 0.5 mm ist, während die Übermass-Toleranz der Tiefe (t) der Vertiefung (3, 4; 8, 9; 14, 15) gegenüber dem Radius (D/2) der Kugel kleiner als 0.3 mm ist.

10. Anwendung der Anordnung gemäss den Ansprüchen 1 bis 9 zur Herstellung von Möbelstücken, die aus einer Mehrzahl von Komponenten zusammengesetzt sind,
**dadurch gekennzeichnet, dass**
die Anordnung zur Verbindung sowohl zum Verbinden von Paaren im Wesentlichen horizontaler Paneltafeln als auch zum Verbinden von Paaren im Wesentlichen vertikaler Paneltafeln verwendet wird, wobei jedoch die Komponenten des Möbelstückes, welche im Wesentlichen vertikale Paneltafeln enthalten, mit mindestens einer Komponente des Möbelstückes gegenseitig verbunden sind, die beiden Komponenten, welche die vertikalen Paneltafeln enthalten, längs einer horizontalen Ebene zusammenhalten.

11. Anwendung der Anordnung gemäss dem Anspruch 10,
**dadurch gekennzeichnet, dass**
die Komponenten modular ausgelegte Komponenten sind, die sich zum Aufbau von Büchergestellen und/oder offenen und/oder mit Türen und/oder mit Verglasung versehenen Regalen eignen.
